## Europäisches Patentamt
## European Patent Office
## Office européen des brevets

(19)

(11) Numéro de publication: **0 012 073**
**A1**

(12)
# DEMANDE DE BREVET EUROPEEN

(21) Numéro de dépôt: **79400912.6**

(22) Date de dépôt: **23.11.79**

(51) Int. Cl.³: **G 06 F 15/20**
**G 01 N 31/08**

(30) Priorité: **28.11.78 FR 7833607**

(43) Date de publication de la demande:
**11.06.80 Bulletin 80·12**

(84) Etats Contractants Désignés:
**DE GB IT**

(71) Demandeur: **Société Anonyme LIGNES TELEGRAPHIQUES ET TELEPHONIQUES 1 Rue Charles Bourseul F-78702 - Conflans-Ste Honorine(FR)**

(72) Inventeur: **Coustre, André S.A. Lignes Telegraphiques et Telephoniques 1 Rue Charles Bourseul F-78702 Conflans-Sainte-Honorine(FR)**

(72) Inventeur: **Elitzsch, Robert S.A. Lignes Telegraphiques et Telephoniques 1 Rue Charles Bourseul F-78702 Conflans-Sainte-Honorine(FR)**

(72) Inventeur: **Caullier, Jean-Claude S.A. Lignes Telegraphiques et Telephoniques 1 Rue Charles Bourseul F-78702 Conflans-Sainte-Honorine(FR)**

(74) Mandataire: **Guyot, Liliane et al, Société Anonyme LIGNES TELEGRAPHIQUES ET TELPHONIQUES 1 Rue Charles Bourseul F-78702 Conflans-Sainte-Honorine(FR)**

(54) **Procédé et dispositif de tracé d'un chromatogramme.**

(57) L'invention concerne un procédé de tracé de chromatogramme en couvrant la surface des pics de graphismes différents suivant qu'il s'agit du solvant ou des pics de composés en solution.

Elle consiste à comparer pour chaque intervalle d'échantillonnage les cases de la mémoire morte appropriée de même adresse relative que celles de la mémoire vive située entre l'adresse du point de la ligne de base et l'adresse du point courant du pic et à introduire le même état binaire dans la mémoire vive.

L'invention est applicable à tout dispositif traceur de courbes constitué d'une imprimante thermique commandée et d'une unité de commande.

EP 0 012 073 A1

./...

Croydon Printing Company Ltd.

2/6

fig 2

TITRE MODIFIÉ
voir page de garde

1

## PROCEDE DE TRACE D'UN CHROMATOGRAMME

L'invention concerne un procédé numérique de tracé de chromatogramme et des résultats d'intégration des pics.

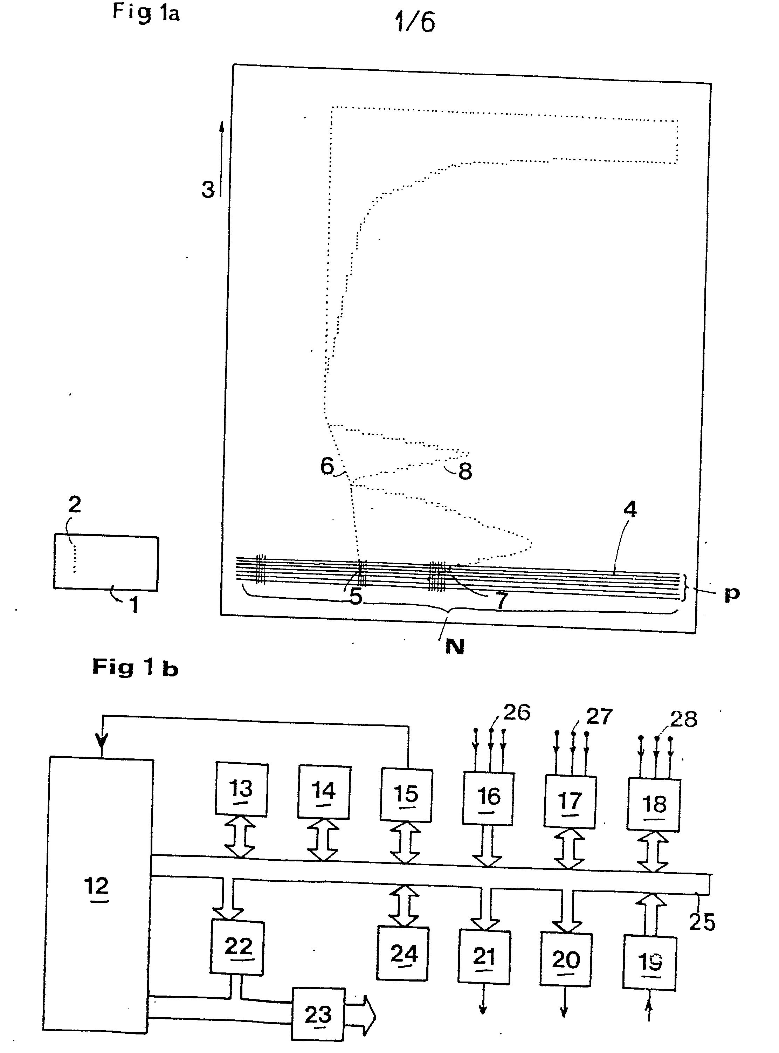

Un procédé mettant en oeuvre une imprimante rapide du type thermique et son unité de commande est décrit dans la demande de brevet français déposée le 25 Janvier 1978 par la Demanderesse sous le titre : "Procédé de représentation graphique de résultats analytiques". La figure 1a représente la tête d'une imprimante thermique 1 en position retournée par rapport à sa position de travail afin de faire apparaître les p éléments chauffants ponctuels 2 qu'elle comporte. Les éléments 2 sont alignés parallèlement à la direction de déplacement de l'enregistrement indiquée par la flèche 3, tandis que la tête imprimante 1 se déplace de gauche à droite en occupant successivement N positions réparties de façon régulière dans la largeur de l'enregistrement pour imprimer des points placés sur p lignes consécutives. A chaque position de la tête imprimante correspond un caractère à p bits, conservé en mémoire à l'adresse correspondant à cette position. Dans ce caractère chaque bit ayant une valeur "1" implique l'impression d'un point, tandis qu'une valeur "0" implique un blanc. La figure 1a représente en 4 un quadrillage à p lignes et N colonnes, dont seuls les points d'intersection sont imprimés, comme c'est le cas par exemple pour la série de points 5 appartenant à la courbe 6 et pour la série de points 7 appartenant à la courbe 8. Après avoir atteint le bord droit de l'enregistrement, la tête imprimante revient s'arrêter au bord gauche pendant que le papier avance de p lignes. Tout est prêt pour qu'un nouveau balayage commence. La figure 1b représente le bloc

diagramme de l'unité de commande de l'imprimante. Cette unité comporte un microprocesseur 12 et ses périphériques :

- mémoire morte 13 ;
- mémoire vive 14 ;
- contrôleur de durée 15 ;
- portes d'interface 16 à 21 ;
- une porte d'adresse 22 et un décodeur d'adresse 23 ;
- un contrôleur d'interruption 24 ;
- un bus d'adresses et de données 25.

La porte 16 reçoit sous forme numérique les ordonnées du point courant du chromatogramme au cours des intervalles d'échantillonnage successifs. Elle reçoit aussi les signaux de début et de fin de pic, ainsi que les signaux indiquant la présence d'une vallée et, après le tracé du chromatogramme, les résultats d'intégration des pics.

La porte 17 est affectée aux consignes telles que vitesse de déroulement du papier de l'imprimante, ordre de tracer la ligne de base, suspension de l'ordre précédent.

La porte 18 constitue un atténuateur préréglé. Les portes 16, 17 et 18 sont reliées par les bornes 26 à 28 à l'intégrateur du chromatographe et par leurs sorties au bus d'adresse et de données 25.

La porte 19 est reliée par ses entrées à l'imprimante et par ses sorties au bus 25. Elle permet au microprocesseur de contrôler l'exécution du tracé.

La porte 20 est reliée par ses entrées au bus 25 et par ses sorties à l'imprimante. Elle permet au microprocesseur de donner des ordres relatifs au déplacement de la tête imprimante.

La porte 21 est reliée au bus 25 par ses entrées et aux éléments chauffants de la tête imprimante par ses sorties.

L'unité de commande ainsi constituée est capable d'élaborer les consignes d'impression de chaque pic et son repère numérique. De plus, après la fin du tracé du chromatogramme cette unité fait procéder à l'impression du tableau des résultats d'intégration des pics et de leur repère numérique.

Le but de la présente invention est un procédé mettant en oeuvre une imprimante du type qui vient d'être décrit et son unité de commande afin d'effectuer une impression d'un premier type entre la courbe du solvant et sa ligne de base et une impression d'un deuxième type entre le pic de chaque composé soluté et les limites qui lui correspondent.

Le procédé de représentation graphique de chromatogrammes à partir des informations fournies par un intégrateur-calculateur dont les surfaces des pics sont remplies par des graphismes qui les différencient du support d'enregistrement dans lequel les consignes d'impression de l'élongation du signal chromatographique sont successivement inscrites dans une mémoire vive à une adresse fonction de l'instant d'échantillonnage et de la valeur échantillonnée et la réception du signal de fin de pic provoquant l'élaboration des consignes d'impression de la ligne de base successivement auxdits instants d'échantillonnage à partir des informations délivrées par l'intégrateur et leur inscription dans une case de la mémoire à une adresse fonction de l'instant d'échantillonnage et de la valeur élaborée selon l'invention, est caractérisé en ce que les cases de la mémoire vive correspondant audit instant d'échantillonnage sont ensuite explorées, depuis celle qui contient les consignes d'impression de l'élongation jusqu'à celle qui contient les consignes d'impression de la ligne de base, en synchronisme avec celles de même adresse d'une mémoire morte additionnelle contenant les consignes d'impression de graphisme et que lesdites consignes sont transférées dans les cases de ladite mémoire vive.

Le dispositif de mise en oeuvre du procédé est caractérisé en ce qu'il comporte au moins une mémoire morte additionnelle contenant les consignes d'impression de graphisme à représenter sur la surface des pics comportant les lignes et un nombre d'adresses dans la ligne égal au nombre de points contenus dans la largeur de l'enregistrement.

L'invention présente les avantages suivants :
- il est possible de perfectionner le dispositif de mise en oeuvre du procédé antérieur en vue de l'adapter au nouveau procédé moyennant un coût supplémentaire faible;
- la durée du tracé d'un chromatogramme n'est pas sensiblement modifiée parce que les opérations supplémentaires relatives à chaque pic peuvent être exécutées pendant l'attente des données numériques concernant le pic suivant ;
- la nouvelle possibilité apportée s'ajoute aux précédentes sans en exclure aucune.

L'invention sera mieux comprise en se reportant à la description qui suit accompagnée des figures 2 à 7 données à titre illustratif, non limitatif, dans lesquelles :
- la figure 2 représente la suite des opérations du procédé selon l'invention concernant le tracé d'un pic de composé en solution ;
- la figure 3 représente un graphisme contenu dans la mémoire morte additionnelle ;
- la figure 4 représente la suite des opérations du procédé selon l'invention concernant le tracé du pic du solvant ;
- la figure 5 représente le tracé d'un pic pendant la fin du pic du solvant ;

- la figure 6 représente le bloc diagramme du dispositif de mise en oeuvre du procédé selon l'invention ;

- la figure 7 représente le tracé d'un chromatogramme effectué par le dispositif de mise en oeuvre du procédé selon l'invention.

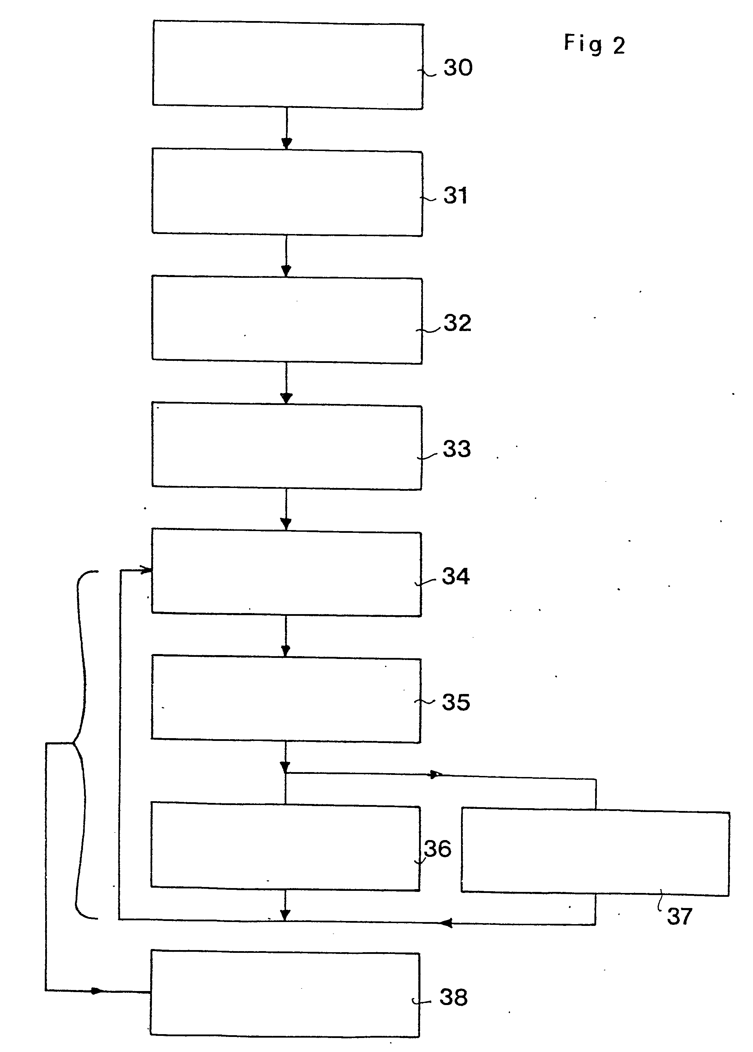

La figure 2 représente la suite des opérations concernant le tracé d'un pic par le procédé selon l'invention. Les opérations 30 à 38 se reproduisent à chaque pic que le chromatographe traite de façon indépendante :

- 30 représente l'inscription dans la mémoire vive du signal de début de pic délivré par l'intégrateur du chromatographe. Ce signal comporte le rang de l'intervalle d'échantillonnage et l'élongation du chromatogramme dans cet intervalle ;

- 31 représente l'inscription dans la mémoire vive des consignes d'impression du point courant du pic dans une case dont l'adresse est fonction du rang de l'intervalle d'échantillonnage et de l'élongation du point courant ;

- 32 représente, l'orsqu'elle existe, l'inscription dans la mémoire vive des consignes d'impression d'un signal de vallée entre deux pics non séparés. Ce signal est inscrit dans une case dont l'adresse est fonction du rang de l'intervalle d'échantillonnage au cours duquel a lieu le signal de vallée et de l'élongation du chromatogramme au point bas de la vallée ;

- 33 représente l'inscription des consignes d'impression du signal de fin de pic dans la case de la mémoire d'adresse résultant du rang de l'intervalle au cours duquel a eu lieu ce signal et de l'élongation du chromatogramme au moment de la fin du pic ;

- 34 représente l'élaboration de la ligne de base du pic par interpolation dans chaque intervalle entre les signaux de début et de fin de pic ;

- 35 représente l'inscription des consignes d'impression du point de la ligne de base dans la case d'adresse résultant du rang de l'intervalle et de la valeur obtenue par interpolation ;

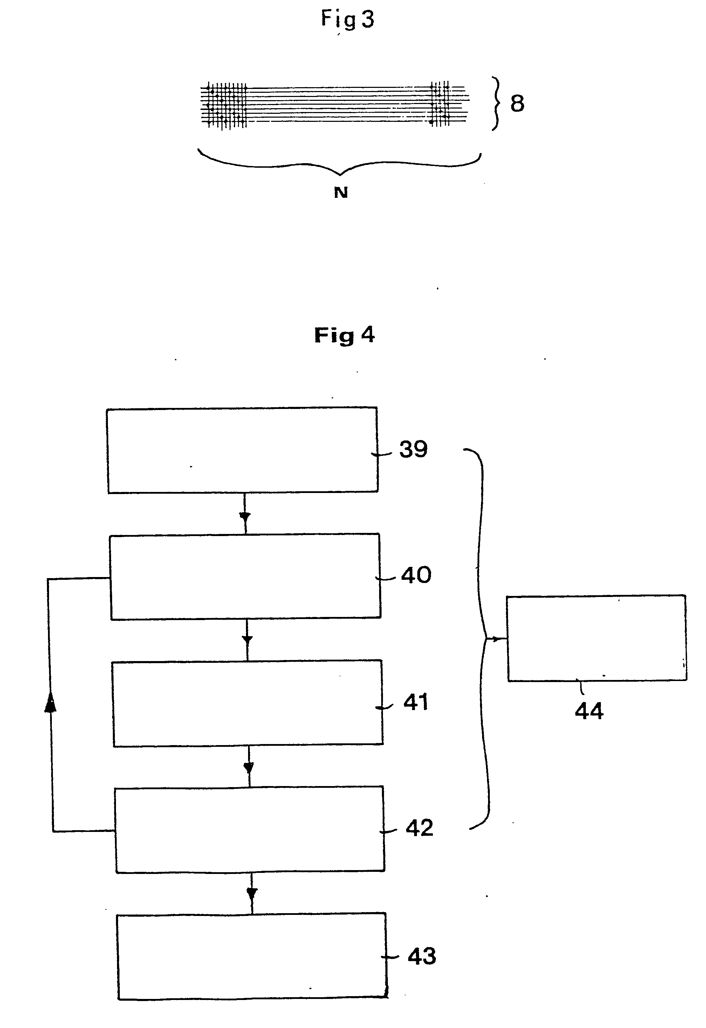

- 36 représente l'exploration simultanée des cases de la mémoire vive, comprises entre la case contenant le point du pic et celle contenant le point de la ligne de base, et des cases d'une mémoire morte additionnelle contenant le graphisme à reproduire. L'exploration de la mémoire additionnelle commence à la première ligne et progresse d'une ligne à chaque nouvel intervalle d'échantillonnage jusqu'à la dernière ligne avec retour à la première ligne autant de fois qu'il est nécessaire. Le nombre de lignes que comporte la mémoire additionnelle est un multiple de huit et chaque ligne est constituée d'un nombre de N cases égal au nombre de positions que la tête imprimante peut occuper au cours d'un balayage. Le graphisme à reproduire sur la surface du pic est conservé dans la mémoire additionnelle en faisant correspondre les états binaires "1" aux points et les "0" aux blancs. Lorsque l'impression à reproduire est aussi simple que des hachures, huit lignes suffisent, comme cela est représenté sur la figure 3. L'exploration simultanée des cases des deux mémoires est effectuée en faisant correspondre les adresses dans la ligne et elle s'accompagne de la mise à l'état "1" des cases de la mémoire vive correspondant une à une aux cases de la mémoire morte à l'état "1".

- Les opérations 34, 35 et 36 se répètent autant de fois qu'il est nécessaire pour atteindre le signal de fin de pic.

- 37 représente l'inscription dans la mémoire vive des consignes d'impression correspondant au signal de vallée conservées dans une extension de la mémoire morte. Le graphisme comportera dans ce cas par exemple un segment de droite blanc entre deux pics ou encore un segment de droite noir.

- 38 représente la délivrance d'un ordre d'impression chaque fois que le nombre des lignes de la mémoire vive ayant reçu les consignes d'impression du graphisme est égal à celui des éléments de la tête imprimante.

La figure 4 représente la suite des opérations concernant le tracé du pic du solvant à partir des signaux de l'intégrateur du chromatographe :

- 39 représente l'inscription dans la mémoire vive du signal de début de pic. Ce signal comporte le rang de l'intervalle et l'élongation du chromatogramme dans cet intervalle.

- 40 représente l'inscription dans la mémoire des consignes d'impression du point courant du pic.

- 41 représente l'inscription dans la mémoire vive des consignes d'impression d'un point de même élongation que le signal de début de pic. Ce point fait partie de la ligne de base du pic du solvant.

- 42 est l'exploration d'une deuxième mémoire additionnelle contenant le graphisme à reproduire dans la surface du pic du solvant effectuée de façon similaire à ce qui a déjà été dit à propos de l'opération 36 et la mise à l'état "1" des cases de la mémoire vive correspondant une à une aux cases de la mémoire morte se trouvant à l'état "1". La répétition des opérations 40, 41 et 42 se poursuit autant de fois qu'il est nécessaire pour atteindre la fin du pic. Ceci est représenté par la flèche allant de la fin de l'opération 42 à l'opération 40.

- 43 représente l'inscription des consignes d'impression du signal de fin du pic du solvant dans la mémoire vive.

- 44 représente une séquence d'impression qui a lieu chaque fois que le nombre des lignes de la mémoire vive ayant reçu les consignes d'impression du graphisme est égal à celui des éléments de la tête imprimante.

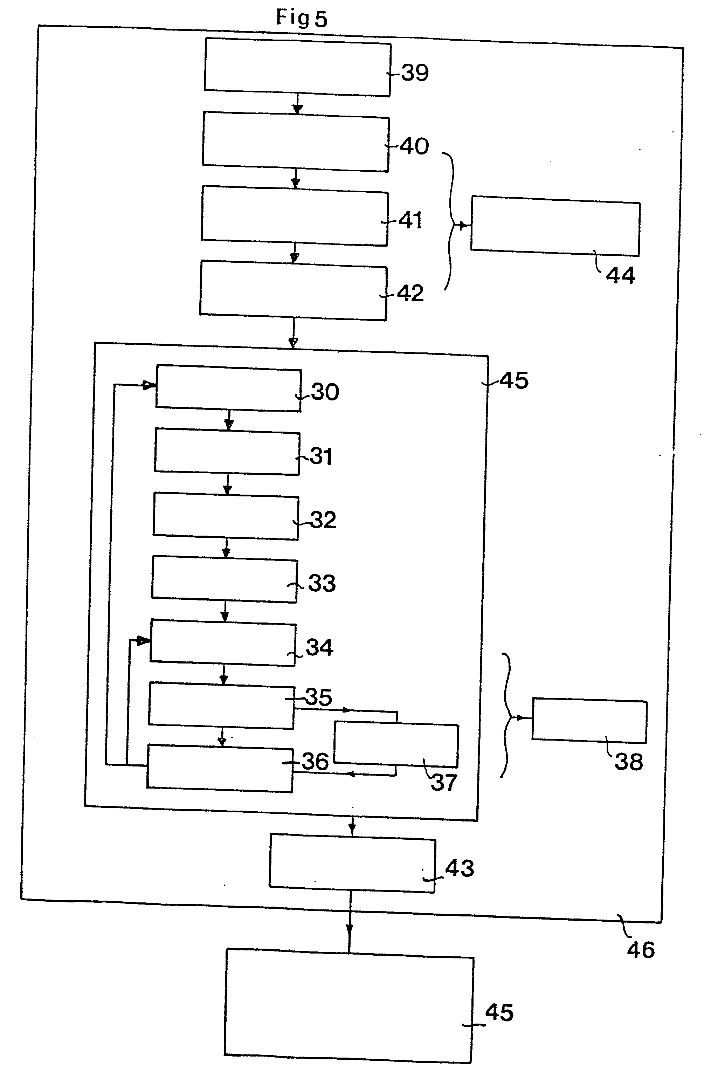

La figure 5 représente la suite des opérations concernant le tracé d'un chromatogramme comportant des pics dûs aux composés chimiques dissouts situés pendant la fin du pic du solvant. Les cadres 45 représentent les opérations décrites à propos de la figure 2. La flèche reliant la fin de l'opération 36 au début de l'opération 30 rappelle que le cycle recommence à chaque pic de composé dissout. La flèche reliant la fin de l'opération 36 au début de l'opération 34 rappelle que la mémoire vive est remplie intervalle par intervalle, un premier graphisme étant utilisé entre le pic d'un composé dissout et sa ligne de base et un deuxième graphisme étant utilisé entre ladite ligne de base du composé dissout et celle du pic du solvant. Le cadre 46 contient toutes les opérations ayant lieu pendant le pic du solvant en particulier. Les séquences d'impression 44 qui ont lieu avant l'apparition des pics de composés dissouts se produisent au cours de l'avancement du chromatogramme. Les ordres d'impression 38 ne sont donnés qu'après le signal de fin de pic d'un composé dissout lorsque le nombre de lignes de la mémoire vive traitées est égal au nombre des éléments de la tête imprimante.

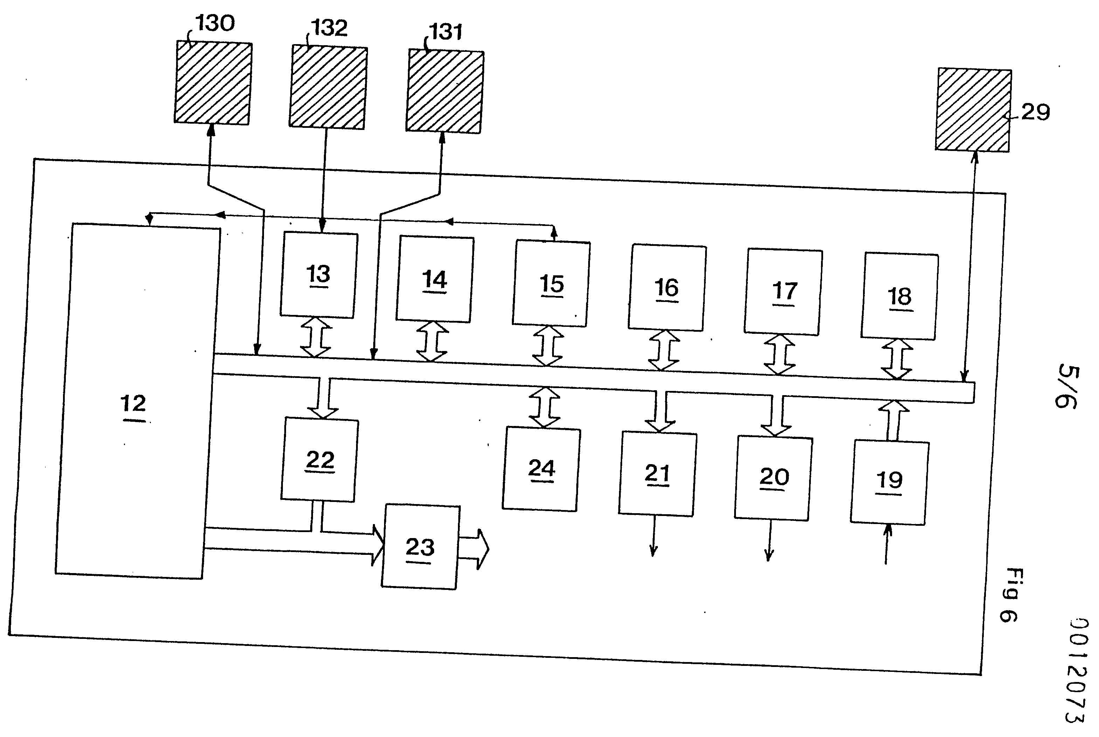

La figure 6 représente le bloc diagramme du dispositif de mise en oeuvre du procédé selon l'invention. Sur cette figure les éléments déjà rencontrés à propos de la figure 1b ont conservé le même repère numérique et sont représentés par des cases claires. Les éléments supplémentaires sont représentés par des cases hachurées. Sur cette figure :

- 130 est une première mémoire morte additionnelle contenant sous forme binaire le graphisme relatif aux composés en solution, les cases dans l'état binaire "1" correspondent à un point imprimé et les cases dans l'état binaire "0" correspondent à un blanc sur le chromatogramme.

- 131 est une deuxième mémoire morte additionnelle contenant le graphisme relatif au solvant. Les cases dans l'état binaire "1" correspondent aux points imprimés sur chromatogramme et les cases dans l'état binaire "0" correspondent à un blanc.

- 132 est un complément à la mémoire 13 contenant les instructions relatives aux séparations entre pics.

- 29 est une porte d'interface supplémentaire permettant de supprimer l'impression sur la surface des pics.

A titre d'exemple, la Demanderesse réalise le dispositif de mise en oeuvre du procédé qui vient d'être décrit au moyen des éléments suivants commercialisés par la société américaine INTEL à Santa Clara :

- 1 microprocesseur 8085
- 2 mémoires mortes 2716
- 3 mémoires mortes additionnelles 2716
- 6 mémoires vives 2114
- 1 contrôleur de durée 8253
- 1 contrôleur d'interruption 8259
- 1 décodeur d'adresse 8205
- 9 portes d'interface 8212
- 2 bus à huit conducteurs

ainsi qu'une imprimante T80 commercialisée par DATA PRODUCTS 6219 De Soto Avenue à Woodland Hills, en Californie, dont le nombre p d'éléments chauffants est égal à 7 et le nombre N de points par ligne est égal à 560.

- L'impression contenue dans la première mémoire morte additionnelle est constituée par des hachures verticales se reproduisant tous les sept intervalles
d'échantillonnage.

　　　- L'impression contenue dans la deuxième mémoire
morte est constituée par des hachures horizontales.

　　　- les séparations verticales entre des pics adjacents sont constituées par une ligne noire allant de la
ligne de base au point le plus bas de la vallée entre
les deux pics.

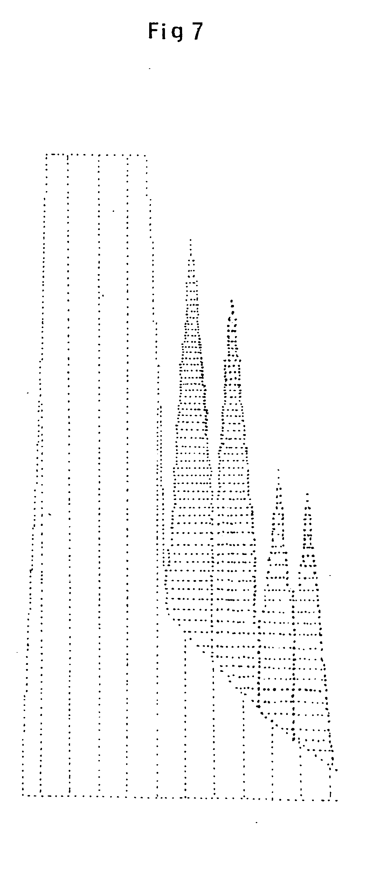

　　　La figure 7 est une vue partielle d'un chromatogramme tracé au moyen du dispositif de mise en oeuvre
selon l'invention.

11

## REVENDICATIONS

1 - Procédé de représentation graphique de chromatogrammes à partir des informations fournies par un intégrateur-calculateur dont les surfaces de pics sont remplies par des graphismes qui les différencient du support d'enregistrement, dans lequel les consignes d'impression de l'élongation du signal chromatographique sont successivement inscrites dans une mémoire vive à une adresse fonction de l'instant d'échantillonnage et de la valeur échantillonnée et la réception du signal de fin de pic provoquant l'élaboration des consignes d'impression de la ligne de base successivement auxdits instants d'échantillonnage à partir des informations délivrées par l'intégrateur et leur inscription dans une case de la mémoire à une adresse fonction de l'instant d'échantillonnage et de la valeur élaborée, caractérisé en ce que les cases de la mémoire vive correspondant audit instant d'échantillonnage sont ensuite explorées, depuis celle qui contient les consignes d'impression de l'élongation jusqu'à celle qui contient les consignes d'impression de la ligne de base, en synchronisme avec celles de même adresse, d'une mémoire morte additionnelle préalablement sélectionnée contenant les consignes d'impression du graphisme correspondant au pic tracé et que lesdites consignes sont transférées dans les cases de ladite mémoire vive.

2 - Procédé de représentation graphique de chromatogrammes selon la revendication 1 caractérisé en ce que le signal de début de pic du solvant délivré par l'intégrateur du chromatographe provoque à chaque intervalle d'échantillonnage l'inscription dans la mémoire vive des consignes d'inscription d'un point dans la case dont l'adresse résulte de l'instant d'échantillonnage et de l'élongation à l'instant de début de pic entraînant le tracé d'une ligne de base

12

horizontale et l'absence de consigne d'impression de graphisme dans la surface du pic.

3 - Dispositif de mise en œuvre du procédé selon la revendication 1 caractérisé en ce qu'il comporte deux mémoires mortes additionnelles contenant les consignes d'impression du graphisme à reproduire respectivement dans l'aire du pic du solvant et celles des composés dissouts.

4 - Dispositif de mise en oeuvre du procédé selon la revendication 2 caractérisé en ce qu'il comporte une seule mémoire additionnelle contenant les consignes d'impression du graphisme réservé aux composés chimiques dissouts.

0012073

**Fig 1a**

**Fig 1 b**

0012073

Fig 2

0012073

Fig 3

8

N

Fig 4

39

40

41

42

43

44

4/6

Fig 5

0012073

Fig 6

Fig 7

Office européen
des brevets

**RAPPORT DE RECHERCHE EUROPEENNE**

| | **DOCUMENTS CONSIDERES COMME PERTINENTS** | | CLASSEMENT DE LA DEMANDE (Int. Cl ⁴) |
|---|---|---|---|
| Catégorie | Citation du document avec indication, en cas de besoin, des parties pertinentes | Revendication concernee | |
| A | RESEARCH AND DEVELOPMENT MAGAZINE (BARRINGTON), vol. 27, no.11, novembre 1976. KARASEK "A low-cost bench-top/MS/ calculator", pages 42-46,48. | | G 06 F 15/20 G 01 N 31/08 |
| A | JOURNAL OF CHROMATOGRAPHIC SCIENCE vol. 9, no. 12, 10 décembre 1971. HETTINGER et al. "A new computing integrator for chromatography", pages 710-716. | | |
| A | DE - A - 2 204 377 (PERKIN-ELMER) | | **DOMAINES TECHNIQUES RECHERCHES (Int. Cl. ⁴)** G 06 F 15/20 G 01 N 31/08 |

---

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 01-02-1980 | BURGAUD |

OEB Form 1503.1   06.78